Europäisches Patentamt

(19) European Patent Office

Office européen des brevets

(11) Veröffentlichungsnummer: **0 123 879**
**B1**

(12) **EUROPÄISCHE PATENTSCHRIFT**

(45) Veröffentlichungstag der Patentschrift:
17.09.86

(51) Int. Cl.⁴: **C 08 G 71/00, C 09 D 3/49**

(21) Anmeldenummer: **84103144.6**

(22) Anmeldetag: **22.03.84**

(54) Verfahren zur Herstellung von Harnstoffkondensationsprodukten und deren Verwendung.

(30) Priorität: **30.03.83 DE 3311514**

(43) Veröffentlichungstag der Anmeldung:
**07.11.84 Patentblatt 84/45**

(45) Bekanntmachung des Hinweises auf die Patenterteilung:
**17.09.86 Patentblatt 86/38**

(84) Benannte Vertragsstaaten:
**AT BE CH DE FR GB IT LI NL SE**

(56) Entgegenhaltungen:
**US - A - 2 653 144**

(73) Patentinhaber: **BASF Lacke + Farben
Aktiengesellschaft, Max-Winkelmann-Strasse 80,
D-4400 Münster (DE)**

(72) Erfinder: **Schupp, Eberhard, Dr., Tilsiter Weg 4,
D-6830 Schwetzingen (DE)**
Erfinder: **Loch, Werner, Dr., In der Bleiche 2,
D-6701 Erpolzheim (DE)**
Erfinder: **Osterloh, Rolf, Dr., Am Wehrhaus 16 a,
D-6718 Gruenstadt (DE)**
Erfinder: **Ahlers, Klaas, Dr., Foehrenweg 21,
D-4400 Muenster (DE)**

(74) Vertreter: **Welzel, Dr. Gunther et al, c/o BASF
Aktiengesellschaft Carl-Bosch-Strasse 38,
D-6700 Ludwigshafen (DE)**

ACTORUM AG

## Beschreibung

Die Erfindung betrifft ein Verfahren zur Herstellung von Harnstoffkondensationsprodukten aus primären Polyaminen, Harnstoff, sekundären Aminen und gegebenenfalls Polyolen und ihre Verwendung als Bindemittelkomponente in hitzehärtbaren Lacken.

Die Herstellung copolymerer Polyharnstoffe aus Diaminen und Harnstoff war bereits bekannt (vgl. R. Pasedag, Tagung der GDCh-Fachgruppe Makromolekulare Chemie in Bad Nauheim, 1966). Dabei wurden jedoch Produkte erhalten, die zwar für Spritzguss und Blasverfahren anwendbar, wegen ihrer schlechten Löslichkeit aber nicht für Lacke geeignet waren.

In der US-A-2 653 144 wird ein Verfahren zur Herstellung von Polyheptamethylenharnstoff beschrieben, wobei äquimolare Mengen Heptamethylendiamin und Harnstoff oder Heptamethylendiisocyanat in Gegenwart geringer Mengen Anilin, Diphenylamin o.a. auf Temperaturen erhitzt werden, bei denen sich Polyharnstoff bildet. Die so erhaltenen Produkte sind gegen Änderungen der Schmelzviskosität stabil, wenn sie auf 250 bis 280°C erhitzt und zu Fäden versponnen werden. Auch diese Produkte sind jedoch für Lacke ungeeignet.

Aufgabe der vorliegenden Erfindung ist es, ein Verfahren zur Herstellung von Harnstoffkondensationsprodukten aufzuzeigen, wonach sich auf einfache Weise Produkte herstellen lassen, die sich als Lackbindemittelkomponenten für hitzehärtbare Lacke verwenden lassen. Diese Aufgabe lässt sich überraschenderweise durch das erfindungsgemässe Verfahren sehr vorteilhaft lösen.

Gegenstand der vorliegenden Erfindung ist ein Verfahren zur Herstellung von Harnstoffkondensationsprodukten aus primärem Diamin und Harnstoff, das dadurch gekennzeichnet ist, dass man

(A) mindestens ein aliphatisches primäres Di- und/oder Polyamin, dessen primäre Aminogruppen durch mehr als 3 Kohlenstoffatome voneinander getrennt sind, oder ein cycloaliphatisches oder aromatisches Polyamin, dessen primäre Aminogruppen durch mindestens 3 Kohlenstoffatome voneinander getrennt sind, mit

(B) Harnstoff,

(C) mindestens einem sekundären Amin mit einem Siedepunkt von weniger als 250°C

und gegebebenfalls

(D) einem oder mehreren Polyalkoholen

bei erhöhter Temperatur, gegebenenfalls in Gegenwart von Katalysatoren, umsetzt und den entstehenden Ammoniak abtrennt.

Gegenstand der vorliegenden Erfindung sind auch Harnstoffkondensationsprodukte, die nach dem erfindungsgemässen Verfahren erhältlich sind.

Gegenstand der Erfindung ist ausserdem die Verwendung der erfindungsgemäss hergestellten Harnstoffkondensationsprodukte als Bindemittelkomponente in hitzehärtbaren Lacken, für die Pulverlackierung sowie insbesondere auch in kathodischen Elektrotauchlacken.

Nach dem erfindungsgemässen Verfahren lassen sich auf einfache Weise Harnstoffkondensationsprodukte herstellen, die sich sehr vorteilhaft als Bindemittelkomponenten in hitzehärtbaren Lacken verwenden lassen. Als Zusatz zu selbstvernetzenden Bindemitteln bewirken die erfindungsgemässen Harnstoffkondensationsprodukte eine grössere Härte und Elastizität des Filmes, bei nicht selbstvernetzenden Bindemitteln können erfindungsgemässen Harnstoffkondensationsprodukte ausserdem die Funktion eines hochwirksamen Vernetzers übernehmen, der oberhalb von etwa 130°C zu harten, vernetzten Filmen führt.

Zu den für das erfindungsgemässe Herstellungsverfahren zu verwendenden Aufbaukomponenten ist im einzelnen folgendes zu sagen:

(A) Als primäres Di- und/oder Polyamin (A) kommen prinzipiell alle aliphatischen, cycloaliphatischen und aromatischen Polyamine in Frage, die mindestens zwei primäre Aminogruppen enthalten, ausgenommen nicht-cyclische aliphatische Amine mit weniger als 4 Kohlenstoffatomen zwischen den primären Aminogruppen und cycloaliphatische oder aromatische Amine, deren primäre Aminogruppen durch weniger als 3 Kohlenstoffatome voneinander getrennt sind, da sich aus diesen Aminen und Harnstoffen cyclische Harnstoffe bilden. Die primären Di- und/oder Polyamine können neben den primären Aminogruppen noch weitere funktionelle Gruppen, wie z.B. sekundäre oder tertiäre Aminogruppen, Hydroxylgruppen oder Ethergruppen, enthalten. Beispiele geeigneter Amine sind 1,4-Diaminobutan, 1,6-Diaminohexan, Heptamethylendiamin, Oktamethylendiamin, Nonamethylendiamin, Dekamethylendiamin, Dodekamethylendiamin oder verzweigte aliphatische primäre Diamine, wie z.B. das Isomerengemisch aus 9- und 10-Aminostearylamin oder aus 9- und 10-Aminomethylstearylamin, 4,9-Dioxadodecandiamin-1,12, 4,4'-Diaminodicyclohexylmethan, 3,3'-Dimethyl-4,4'-diaminodicyclohexylmethan, 4,4'-Diaminodiphenylmethan, Toluylendiamin, Tris-(amino-ethyl)-amin und Tris-(aminopropoxy-ethyl)-amin.

Neben derartigen Polyaminen mit niedrigem, definiertem Molekulargewicht sind als Komponente (A) auch oligomere oder polymere Polyamine mit Molekulargewichten bis zu 3000 einsetzbar. Beispiele solcher Polyamine sind Diamine, die durch reduktive Cyanethylierung von Polyolen wie Polytetrahydrofuran herstellbar sind. Derartige Produkte enthalten endständige primäre Aminogruppen in Form von Aminopropoxygruppen.

Die oben beschriebenen Amine können für sich allein oder im Gemisch miteinander eingesetzt werden.

(B) Komponente (B) ist Harnstoff.

(C) Als sekundäre Amine (C) können im Prinzip beliebige sekundäre Amine eingesetzt werden, die einen Siedepunkt von weniger als 250°C besitzen, besonders bevorzugt solche mit einem Siedepunkt von 100 bis 200°C. Beispiele von besonders bevorzugten Aminen sind Di-n-propylamin, Di-iso-propylamin, Di-n-butylamin, Di-iso-butylamin und Di-n-hexylamin.

(D) Gegebenenfalls kann auch ein Polyalkohol (D) mit mindestens 2 Hydroxylgruppen mitverwendet werden. Eine Mitverwendung derartiger Polyalkohole kann in vielen Fällen zu einer besseren Verträglichkeit der erfindungsgemässen Produkte mit anderen Bindemittelkomponenten führen. Polyalkohole mit mehr als 2 Hydroxylgruppen können zur Erhöhung der Funktionalität der erfindungsgemässen Harnstoffkondensationsprodukte verwendet werden. Die Mitverwendung mancher Polyole bei der Herstellung erfindungsgemässer Bindemittelkomponenten, die für die kathodische Elektrotauchlackierung eingesetzt werden, kann sogar zu besserer Spannungsfestigkeit und besserem Umgriff der Elektrotauchlacke führen. Beispiele verwendbarer Polyalkohole sind Ethylenglykol, Propylenglykol-1,3, Butandiol--1,4, Trimethylolpropan, Trishydroxyethylisocyanurat und Pentaerythrit. Als Komponente (D) sind Polyalkohole mit einem Molekulargewicht von 62 bis 5000 und 2 bis 10 Hydroxylgruppen bevorzugt.

Zur erfindungsgemässen Herstellung der Harnstoffkondensationsprodukte werden die Komponenten (A), (B), (C) und gegebenenfalls (D) miteinander bei erhöhter Temperatur umgesetzt, z.B. indem man sie zusammen allmählich bis auf 120°C bis 230°C, bevorzugt bis auf 150 bis 210°C, erhitzt. Dabei ist es im allgemeinen nicht notwendig, einen Katalysator zu verwenden, doch können zusätzlich Katalysatoren wie basische Katalysatoren, z.B. Natriummethylat oder saure Katalysatoren, wie p-Toluolsulfonsäure oder β-Naphthalinsulfonsäure, Schwermetallsalze, vorzugsweise Cu-I-Salze, wie Kupfer-I-chlorid oder Cu-I-bromid in Mengen bis zu 3 Gew.-%, bezogen auf die Gesamtmenge der Komponenten (A) bis (C) bzw. (A) bis (D), eingesetzt werden.

Eine bevorzugte Ausführungsform des erfindungsgemässen Verfahrens besteht auch darin, die Umsetzung unter einem Druck von 0,1 bis 20 bar durchzuführen.

Es ist nicht nötig, alle Komponenten (A) bis (C) bzw. (A) bis (D) gleichzeitig einzusetzen, es kann z.B. auch zuerst der Harnstoff (B) und das primäre Di- und/oder Polyamin (A) bei 110 bis 150°C zur Reaktion gebracht werden und anschliessend dann das sekundäre Amin (C) entweder auf einmal oder dem fortschreitenden Umsatz entsprechend allmählich zugegeben werden, wobei zweckmässigerweise eine Temperatur von 140 bis 230°C eingehalten wird. Die allmähliche Zugabe bietet sich in den Fällen an, in denen ein sekundäres Amin mit relativ niedrigem Siedepunkt eingesetzt wird und das Verfahren nicht unter Druck durchgeführt wird. Nach beendeter Zugabe lässt man im allgemeinen noch 1 bis 20 Stunden nachreagieren.

Werden Polyalkohole (D) mitverwendet, so können diese zusammen mit den Aminen dem Harnstoff zugesetzt werden, es ist jedoch auch möglich, zuerst nur die Komponenten (A) bis (C) zur Reaktion zu bringen und anschliessend mit dem Polyalkohol (D) umzusetzen.

Die Mengenverhältnisse, in denen die einzelnen Komponenten (A) bis (D) eingesetzt werden, sind nicht kritisch. Man wird im allgemeinen innerhalb eines Äquivalentverhältnisses von $NH_2$-Gruppen der primären Di- und/oder Polyamine (A) zu $NH_2$-Gruppen des Harnstoffs (B) zu NH-Gruppen des sekundären Monoamins (C) zu OH-Gruppen des Polyalkohols (D) von 1:1,2 bis 2,4:0,2 bis 20:0 bis 0,9 arbeiten bzw. pro Mol Harnstoff (B) etwa 2 Äquivalente der Summe aus (A), (C) und (D) verwenden. Um die Reaktion zu beschleunigen, kann auch ein Überschuss an (C) eingesetzt werden, der am Ende der Reaktion wieder entfernt wird.

Die Herstellung der Harnstoffkondensationsprodukte kann in inerten Lösemitteln, wie höhersiedenden Kohlenwasserstoffen oder Ethern durchgeführt werden. Beispiele geeigneter Lösemittel sind Toluol, Xylol und Kohlenwasserstofffraktionen mit einem Siedebereich von 120 bis 200°C bzw. als Ether 5,8-Dioxadodecan. Die Reaktion kann aber auch ohne Lösemittel durchgeführt werden.

Die erfindungsgemäss hergestellten Harnstoffkondensationsprodukte eignen sich hervorragend als Bindemittelkomponente in hitzehärtbaren Lakken. Werden sie zu selbstvernetzenden Bindemitteln zugesetzt, so bewirken sie eine grössere Härte und Elastizität der eingebrannten Lackfilme und verbessern Metallhaftung und Korrosionsschutz, bei nicht selbstvernetzenden Bindemitteln können die erfindungsgemässen Harnstoffkondensationsprodukte ausserdem die Funktion eines hochwirksamen Vernetzers übernehmen, der oberhalb von etwa 130°C zu harten, vernetzten Filmen führt.

Als selbstvernetzende Bindemittel bzw. nicht selbstvernetzende Bindemittel, die mit den erfindungsgemässen Harnstoffkondensationsprodukten kombiniert werden können, kommen die in der Lackchemie üblichen Bindemittel in Frage. Geeignet sind vor allem Polyadditions-, Polykondensations- oder Polymerisationsprodukte mit einem mittleren Molekulargewicht $\overline{M}_n$ von 500 bis 10000, die aus den verschiedensten Verbindungsklassen ausgewählt sein können. Wichtig ist allein, dass sie im Mittel mindestens zwei OH- und/oder primäre und/oder sekundäre Amino-Gruppen besitzen. Bevorzugt soll die Komponente einen harzartigen Charakter haben. Beispiele geeigneter Materialien sind Polyester, Alkydharze, Polyether, Polyacrylatharze, Polyurethane, Epoxidharze und ihre Umsetzungsprodukte mit Alkoholen, Mercaptanen oder Aminen. Eine weitere geeignete Verbindungsklasse sind Polydienharze oder -öle, z.B. Polybutadienöle. In diese lassen sich z.B. durch Addition von Mercaptoethanol an einen Teil der Doppelbindungen OH-Gruppen einführen. Eine weitere Möglichkeit, OH-Gruppen einzuführen, ist die Umsetzung mit Maleinsäureanhydrid und nachfolgende Reaktion mit OH-haltigen Aminen wie Ethanolamin oder Diethanolamin. Auch durch Epoxidierung der Polybutadienöle mit Persäuren und anschliessende Umsetzung mit Aminen lässt sich die benötigte Derivatisierung durchführen.

Geeignete Polyester sind solche mit einem mittleren Molekulargewicht $M_n$ von 500 bis 10000 und einer Hydroxylzahl von 25 bis 400 aus aliphatischen und/oder aromatischen Dicarbonsäuren mit 4 bis 10 Kohlenstoffatomen, beispielsweise Bernsteinsäure, Glutarsäure, Adipinsäure, Pimelinsäure, Korksäure, Azelainsäure, Sebacinsäure, Cyclohexandicarbonsäure, Phthalsäure, Isophthalsäure oder Terephthalsäure bzw. deren Derivaten und mehrwertigen Alkoholen, wie aliphatischen Diolen, wie Ethylenglykol, Diethylenglykol, Triethylenglykol, Polyethylenglykol, Propandiol, Butandiol, Hexandiol, Neopentylglykol oder Hydroxypivalinsäureneopentylglykolester und gegebenenfalls höherwertige Alkohole, wie Trimethylolpropan, Glycerin, Erythrit, Pentaerythrit, Trimethylolbenzol oder Trishydroxyethylisocyanurat.

Geeignete Alkydharze sind ähnlich aufgebaut, nur enthalten sie zusätzlich eine oder mehrere Monocarbonsäuren wie z.B. Fettsäuren. Auch Alkydharze welche Glycidylester von verzweigten Carbonsäuren enthalten, können verwendet werden.

Geeignete Polyether sind z.B. aliphatische oder araliphatische Polyether, welche durch Umsetzung von zwei- und/oder mehrwertigen Alkoholen, mit verschiedenen Mengen an Ethylen- und/oder Propylenoxid erhalten werden.

Geeignete Polyacrylate sind OH-gruppenhaltige Polyacrylate mit einer Hydroxylzahl von 25 bis 500. Diese sollten eine Säurezahl < 25, bevorzugt < 10 und einen K-Wert nach Fikentscher (3%ig in Aceton) von 10 bis 40, vorzugsweise von 12 bis 25 aufweisen und können z.B. folgende Monomeren einpolymerisiert enthalten:

10 bis 100 Gew.-%, vorzugsweise 20 bis 40 Gew.-%, mindestens eines OH- oder NH-Gruppen enthaltenden Monomeren, beispielsweise Isopropylaminopropylmethacrylamid oder Hydroxy-$(C_2$-$C_4)$-alkylester einer $\alpha,\beta$-ethylenisch ungesättigten Carbonsäure, beispielsweise 2-Hydroxyethyl- und Hydroxypropyl(meth)acrylat sowie Butandiol-mono-(meth)acrylat, 0 bis 90 Gew.-%, vorzugsweise 60 bis 80 Gew.-%, mindestens einer ethylenisch ungesättigten carboxyl- und hydroxylgruppenfreien Verbindung, beispielsweise Vinylaromaten, wie Styrol und Vinyltoluol, Vinylester von Carbonsäuren mit 2 bis 18 Kohlenstoffatomen, wie Vinylacetat und Vinylpropionat, Vinylether von Monoalkanolen mit 1 bis 18 Kohlenstoffatomen, wie Vinylmethylether und Vinylisobutylether, Ester der Acrylsäure oder Methacrylsäure mit $C_1$-$C_{12}$-Monoalkanolen, entsprechende Maleinsäure-, Fumarsäure- und Itaconsäurediester, (Meth-)acrylsäureamid, (Meth-)acrylsäurenitril, Monomere mit tertiären Aminogruppen wie Diethylaminoethylacrylat oder Diethylaminoethylacrylamid sowie Gemische dieser Monomeren. Eine weitere Möglichkeit, basische Acrylate zu erhalten, ist der Einsatz von Epoxidgruppen tragenden Monomeren wie Glycidylmethacrylat und Addition von Aminen an die Oxiranringe der Polymerisate.

Geeignete Polyurethane sind:

OH-gruppenhaltige Polyurethane mit einer Hydroxylzahl von 25 bis 600 aus aliphatischen und/oder aromatischen Diisocyanaten, die beispielsweise aus Tetramethylendiisocyanat, Hexamethylendiisocyanat, Isophorondiisocyanat, Diphenylmethandiisocyanat, Toluylendiisocyanat, Naphthylendiisocyanat, 4,4'-Diphenyletherdiisocyanat, sowie gegebenenfalls daraus hervorgehende Di- oder Trimere, und aliphatischen Diolen, wie Ethylenglykol, Diethylenglykol, Triethylenglykol, Polyethylenglykole, Propandiol, Butandiol, Hexandiol, Neopentylglykol oder Hydroxypivalinsäureneopentylglykolester und gegebenenfalls höherwertigen Alkoholen, wie Trimethylolpropan, Glycerin, Pentaerythrit, Trimethylolbenzol oder Trishydroxyethylisocyanurat erhältlich sind.

Geeignete Epoxidharze sind z.B. Glycidylether, wie sie aus 2,2-Bis-(4-hydroxyphenyl)-propan und Epichlorhydrin hergestellt werden. Diese Epoxidharze können weiter modifiziert sein, z.B. durch Umsetzung mit polyfunktionellen Alkoholen oder SH-Verbindungen. Beispiele solcher, für die Modifizierung geeigneter polyfunktioneller Alkohole sind Ethylenglykol, Propylenglykol-1,2, Propylenglykol-1,3 und Butandiol-1,4.

Ist eine Elastifizierung erwünscht, können auch noch langkettige polyfunktionelle Alkohole oder Mercaptane eingesetzt werden. Werden die polyfunktionellen Alkohole oder Mercaptane in grösseren als äquivalenten Mengen in Bezug auf die vorhandenen Epoxidgruppen eingesetzt, so entstehen Produkte mit endständigen OH- oder SH-Gruppen. Setzt man dagegen geringere als äquivalente Mengen ein, so entstehen Produkte mit endständigen Epoxidgruppen, die gegebenenfalls weiter umgesetzt werden können. Während die Umsetzung der Mercaptane mit Epoxidgruppen bereits ohne Katalysator abläuft, ist für die Umsetzung der Alkohole die Verwendung eines Katalysators wie z.B. Dimethylbenzylamin und höherer Temperaturen von etwa 50 bis 150°C notwendig.

Die erfindungsgemässen Harnstoffkondensationsprodukte können mit üblichen selbstvernetzenden Bindemitteln in solchen Mengen kombiniert werden, dass diese Bindemittelkombinationen 2 bis 50, vorzugsweise 10 bis 40 Gew.-% des erfindungsgemässen Harnstoffkondensationsproduktes und 50 bis 95, vorzugsweise 60 bis 90 Gew.-% des anderen selbstvernetzenden Bindemittels enthalten.

Die Mengenverhältnisse bei Kombinationen mit nicht vernetzenden Bindemitteln sind 10 bis 60, vorzugsweise 10 bis 40 Gew.-% Harnstoffkondensationsprodukt und 40 bis 90, vorzugsweise 60 bis 90 Gew.-% nicht vernetzendes Bindemittel.

Die erfindungsgemässen Bindemittel können, gegebenenfalls mit Zusätzen wie Pigmenten, Hilfsmitteln und Härtungskatalysatoren, durch übliche Methoden wie Spritzen, Tauchen, Streichen, Giessen und Rakeln auf Substanzen wie Holz, Kunststoff oder Metall aufgebracht werden.

Für die Herstellung von Pulverlacken werden jeweils feste, lösungsmittelfreie Kombinationen der erfindungsgemässen Harnstoffkondensationsprodukte mit anderen Bindemitteln, deren Erweichungspunkte aus Gründen der Blockfestigkeit jeweils > 60°C liegen sollten, trocken gemahlen und mit üblichen Zusätzen, wie Pigmenten, Füllstoffen und Verlaufshilfsmitteln, beispielsweise auf Polyacrylatbasis, vermischt. Die Mischungen werden anschliessend bei Temperaturen um 100°C schmelzhomogenisiert (Extruder). Nach Abkühlen der Extrudate auf Raumtemperatur werden diese gründlich gemahlen. Durch Sieben werden grobe Anteile (über 70 μm) abgetrennt. Die Applikation der Pulverlacke erfolgt üblicherweise durch elektrostatisches Pulversprühen.

Besonders geeignet sind die erfindungsgemässen Produkte für den Einsatz in Bindemittelsystemen, welche basische Gruppen enthalten, speziell in solchen, welche durch Protonierung mit Säuren wasserverdünnbar werden, insbesondere in Bindemittelsystemen für die kathodische Elektrotauchlackierung elektrisch leitfähiger Substrate, wie z.B. Metallteile, Bleche usw. aus Messing, Kupfer, Aluminium, metallisierter Kunststoffe oder mit leitendem Kohlenstoff überzogener Materialien, sowie Eisen und Stahl, die gegebenenfalls chemisch vorbehandelt, z.B. phosphatisiert, sind. Dazu wird zur zumindest teilweisen Neutralisation eine Säure, wie z.B. Ameisensäure, Essigsäure, Phosphorsäure oder Milchsäure zugegeben. Die erfindungsgemässen Harnstoffkondensationsprodukte eignen sich auch als Bindemittelkomponente für das EPC (= Electro Powder-Coating)-Verfahren.

Beispiele für derartige basische Gruppen enthaltende Bindemittel sind Umsetzungsprodukte von Epoxidharzen mit primären oder sekundären Aminen. Dabei bietet sich besonders die Umsetzung mit hydroxylgruppenhaltigen Aminen, wie z.B. Ethanolamin, Methylethanolamin und Diethanolamin an.

Werden solche Produkte eingesetzt, die ausreichende Mengen an Aminogruppen enthalten, um nach Protonierung mit Säuren wasserlöslich oder wasserdispergierbar zu werden, lassen sich in Kombination mit den erfindungsgemässen Harnstoffkondensationsprodukten wasserdispergierbare Einbrennlackbindemittel herstellen, insbesondere solche, die für die kathodische Elektrotauchlackierung verwendet werden können. Für diesen Zweck können die oben erwähnten Umsetzungsprodukte von Epoxidharzen mit primären oder sekundären Aminen eingesetzt werden.

Viele der für die kathodische Elektrotauchlackierung vorgeschlagenen Trägerharze sind auch in Kombination mit den erfindungsgemässen Harnstoffkondensationsprodukten einsetzbar, so z.B. die Umsetzungsprodukte phenolischer Mannichbasen mit Epoxidharzen gemäss der DE-PS 24 19 179, die Umsetzungsprodukte von kettenverlängerten Epoxidharzen mit sekundären Aminen gemäss der US-PS 4 104 147, Umsetzungsprodukte von (Meth-)-acrylamidomethylierten Phenolen, Aminen und Epoxidharzen, z.B. gemäss DE-OS 29 42 488 und DE-OS 30 21 300.

Es ist häufig vorteilhaft, Produkte einzusetzen, die primäre und/oder sekundäre Aminogruppen enthalten, da sich damit wässrige Elektrotauchlackbäder mit hohen pH-Werten von z.B. 6,5 bis 8,0 herstellen lassen. Durch hohe pH-Werte, vor allem solche nahe pH 7 oder darüber, lässt sich eine Korrosion von Anlagen vermeiden. Eine Möglichkeit, zu geeigneten Produkten mit primären und sekundären Aminogruppen zu kommen, ist die Umsetzung von überschüssigen primären Diaminen mit Epoxidharzen und anschliessende Abtrennung des überschüssigen Amins bei erhöhter Temperatur und vermindertem Druck.

Als Diamine kommen dafür vor allem solche mit 2 bis 6 Kohlenstoffatomen in Betracht, z.B. Ethylendiamin, 1,2- und 1,3-Diaminopropan, 1,4-Diaminobutan und Hexamethylendiamin. Die Reaktionsprodukte können, falls gewünscht, mit Dicarbonsäuren kettenverlängert werden, z.B. mit Sebazinsäure oder mit dimerer Fettsäure. Durch das Verhältnis Dicarbonsäure zu Epoxidharz-Aminaddukt kann man das gewünschte Molekulargewicht einstellen, z.B. kann man auf zwei Moleküle Epoxidharz-Aminaddukt 1 Mol dimerer Fettsäure einsetzen.

Eine weitere Möglichkeit, geeignete Produkte mit primären Aminogruppen herzustellen, ist der Umsatz von Epoxidharzen mit sekundären Aminen, die geblockte primäre Aminogruppen enthalten. Beispiele für solche Amine sind das Diketimin von Diethylentriamin, das Ketimin von Aminoethylethanolamin und das Ketimin von N-Methyl-ethylendiamin. Die Ketimine lassen sich in einfacher Weise aus den freien Aminen und einem Keton, z.B. Methylisobutylketon, unter Auskreisen von Wasser herstellen. Bei der Umsetzung mit Epoxidharzen reagiert nur die sekundäre Aminogruppe, anschliessend kann das Ketimin durch Zugabe von Wasser gespalten werden, wobei sich die freie primäre Aminogruppe zurückbildet. Durch Umsetzung eines Teils der primären Aminogruppen mit Dicarbonsäuren lassen sich auch diese Produkte durch Kettenverlängerung elastifizieren.

Die folgenden Beispiele von Herstellung und Anwendung sollen die Erfindung erläutern, ohne sie zu beschränken. Die angegebenen Teile und Prozente sind, soweit nicht anders angegeben, Gewichtsteile und Gewichtsprozente.

*Beispiel 1*

58 Teile Hexamethylendiamin, 60,1 Teile 3,3'-Dimethyl-4,4'-diaminodicyclohexylmethan und 90 Teile Harnstoff werden innerhalb von 2 Stunden auf 160°C erhitzt. Dabei spaltet sich ab etwa 120°C Ammoniak ab. Die Reaktionsmischung wird zuerst flüssig und erstarrt sann zu einer weissen Kristallmasse. Die Temperatur wird erhöht, bis bei 180°C eine klare Schmelze entsteht. Bei dieser Temperatur werden innerhalb von 8 Stunden 193,5 Teile Dibutylamin zugegeben. Nach beendeter Zugabe wird so lange bei 180 bis 190°C gehalten, bis der Rückfluss zum Erliegen kommt, wozu etwa 4 Stunden benötigt werden. Nach dem Abkühlen erstarrt das Harnstoffkondensationsprodukt zu einer farblosen, glasartigen Masse mit einem Erweichungspunkt von etwa 100°C.

*Beispiel 2*

134 Teile Trimethylolpropan, 360 Teile Harnstoff, 387 Teile Dibutylamin, 174 Teile Hexamethylendiamin und 357 Teile 3,3'-Dimethyl-4,4'-diaminodicyclohexylmethan werden langsam erhitzt. Ab 120°C kommt es zur Abspaltung von Ammoniak und der Harnstoff geht in Lösung. Innerhalb von 2 Stunden wird die Temperatur auf 155°C erhöht, wobei starker Rückfluss auftritt und grosse Mengen eines weichen, kristallinen Niederschlags ausfallen. Nach weiteren 5 Stunden unter Rückfluss hat sich der Niederschlag wieder aufgelöst und eine Temperatur von 165°C ist erreicht. Nun werden innerhalb von 2 Stunden 387 Teile Dibutylamin zugetropft und nach beendeter Zugabe noch 8 Stunden auf 185°C erhitzt. Anschliessend werden bei dieser Temperatur 360 Teile Dibutylamin im Vakuum abgezogen und nach dem Abkühlen auf 130°C mit 517 Teilen Toluol verdünnt. Das Produkt ist eine farblose, viskose Flüssigkeit mit einem Festgehalt von 70%.

### Beispiel 3

Es wird wie in Beispiel 2 verfahren, es werden jedoch 232 Teile Hexamethylendiamin und 238 Teile 3,3'-Dimethyl-4,4'-diaminodicyclohexylmethan eingesetzt. Zum Verdünnen auf 70% Festgehalt werden nur 492 Teile Toluol benötigt.

### Beispiel 4

Die Reaktion wird in einem Druckgefäss durchgeführt, welches mit einem Rührer und einem Rückflusskühler versehen ist, wobei oberhalb des Rückflusskühlers ein Überdruckventil angebracht ist, welches auf 6 bar eingestellt ist. Das Gefäss wird mit 58 Teilen Hexamethylendiamin, 60,1 Teilen 3,3'-Dimethyl-4,4'-diaminodicyclohexylmethan, 90 Teilen Harnstoff und 151,8 Teilen Di-n-propylamin gefüllt und 5 Stunden auf 185°C erhitzt. Dabei wird ein Druck von 6 bar aufrechterhalten, überschüssiges Ammoniak entweicht durch das Überdruckventil. Nach beendeter Reaktion wird entspannt und nach Abkühlung auf 120°C mit 80 Teilen Isobutanol verdünnt.

### Verwendungsbeispiele

### Beispiel 5

Anwendung eines erfindungsgemässen Harnstoffkondensationsproduktes in einem konventionell applizierten Weisslack:

Zunächst wird ein nicht selbstvernetzendes Polyadditionsprodukt hergestellt. Dazu werden 400 Teile Hexamethylendiamin auf 80°C erwärmt. Anschliessend wird eine 80%ige Lösung von 400 Teilen eines handelsüblichen Epoxidharzes auf Basis von 2,2-Bis-(4-hydroxyphenyl)-propan mit einem Epoxidäquivalentgewicht von 500 in Toluol zugefügt. Nach Abklingen der anfänglichen exothermen Reaktion lässt man 30 Minuten bei 100°C ausreagieren. Dann wird überschüssiges Hexamethylendiamin und Toluol im Vakuum abdestilliert, wobei eine Innentemperatur von 180°C erreicht wird. Anschliessend werden in einem Dünnschichtverdampfer bei 0,5 mbar und 180°C die verbliebenen Spuren von freiem Amin abgezogen. Das Epoxid-Aminaddukt weist eine Aminzahl von 169 mg KOH/g und einen Erweichungspunkt von 95°C auf.

100 Teile dieses Harzes, 120 Teile Ethylglykol, 88,6 Teile Butylglykol, 80 Teile Titandioxid und 71,4 Teile des Harnstoffkondensationsproduktes aus Beispiel 3 werden unter Erwärmen verrührt und anschliessend in einer Sandmühle bis zu einer Körnigkeit nach DIN 53203 von 10 μm vermahlen. Nach Abtrennung der Mahlkörper resultiert eine Lacklösung mit einem Festgehalt von 50%. Diese wird auf Stahlbleche gerakelt (Nassfilmdicke 100 μm) und 20 Minuten bei 140°C eingebrannt. Es entsteht ein hochglänzender, harter und elastischer Lackfilm, der gegen Aceton (100maliges Hin- und Herreiben mit einem acetongetränkten Wattebausch) vollkommen resistent ist.

Verwendung der erfindungsgemässen Harnstoffkondensationsprodukte in kathodischen Elektrotauchlacken:

### Beispiel 6

Zunächst wird ein nicht selbstvernetzendes, kathodisch abscheidbares Bindemittel hergestellt. Dazu werden 200 Teile des Epoxid-Aminadduktes aus Beispiel 5, 30 Teile dimerisierte Fettsäure und 20 Teile Xylol allmählich unter Auskreisen von Wasser auf 190°C erhitzt und eine Stunde bei dieser Temperatur gehalten. Nach dem Abkühlen auf 130°C wird zunächst mit 9 Teilen Butylglykol und danach mit 70 Teilen Isobutanol verdünnt. Das Produkt hat einen Fetsgehalt von 70%.

Zu 100 Teilen dieser Lösung werden 42,8 Teile des Harnstoffkondensationsproduktes aus Beispiel 1 gegeben und mit 2,4 Teilen Essigsäure vermischt.

### Beispiel 7

Zu 100 Teilen des nicht selbstvernetzenden, kathodisch abscheidbaren Bindemittels aus Beispiel 6 werden 42,8 Teile des Harnstoffkondesationsproduktes aus Beispiel 2 gegeben und mit 2,4 Teilen Essigsäure vermischt.

### Beispiel 8

Zu 100 Teilen des nicht selbstvernetzenden, kathodisch abscheidbaren Bindemittels aus Beispiel 6 werden 42,8 Teile des Harnstoffkondensationsproduktes aus Beispiel 3 gegeben. Nach Zusatz von 2,2 Teilen Essigsäure wird das Produkt wasserverdünnbar.

### Prüfung der Bindemittel

Zur Prüfung als kathodische Elektrotauchlacke werden durch Zugabe von vollentsalztem Wasser aus den mit Säure versetzten Bindemitteln 10%ige Dispersionen hergestellt. Unter Rühren wird zu jeweils 1000 Teilen der jeweiligen Bindemitteldispersion 66 Teile einer Pigmentpaste zugesetzt, welche folgendermassen hergestellt worden ist:

### Pigmentpaste

Nach Beispiel 1a) der DE-OS 31 21 765 wird ein Pastenbindemittel hergestellt. Dazu werden in einem Reaktionsgefäss 200 Teile Ethylenglykolmonobutylether auf 90°C erwärmt. Dann wird binnen 2 Stunden eine Mischung aus 396 Teilen N-Vinylpyrrolidon, 204 Teilen Vinylpropionat und 1,2 Teilen Azobisisobutyronitril zugetropft. Abschliessend wird 1 Stunde lang bei 90°C nachpolymerisiert. Das resultierende Lösungspolymerisat hat einen K-Wert nach Fikentscher von 24. Der Festkörpergehalt der Copolymerisatlösung beträgt 76%.

In einer Rührwerksmühle werden 250 Teile dieser Copolymerisatlösung, 210 Teile Ethylenglykolmonobutylether, 555 Teile Ethylenglykolmonoethylether, 837 Teile vollentsalztes Wasser, 1084 Teile Kaolin, 217 Teile basisches Bleisilikat, 145 Teile Russ, 36 Teile Rutil und 3000 Teile Glasperlen von einem Durchmesser von 2 mm 45 Minuten bei einer Drehzahl von 1000 Umdrehungen/Minute gerührt. Nach dem Abtrennen der Glasperlen wird eine Schwarzpaste mit einem Festgehalt von 50,6% erhalten.

Die auf diese Weise hergestellten Elektrotauchbäder werden 48 Stunden bei 30°C gerührt. An kathodisch geschalteten, zinkphosphatierten Prüftafeln aus Stahl werden Lackfilme innerhalb von 2 Minuten bei der in der Tabelle angegebenen Spannung abgeschieden und 20 Minuten bei 180°C, bei 160°C und bei 140°C eingebrannt. Anschliessend wird die Beständigkeit gegen Aceton durch 50maliges Hin- und Herreiben mit einem acetongetränkten Wattebausch und die Elastizität in Form der Schlagtiefung geprüft. Die folgende Tabelle zeigt die Ergebnisse:

Ergebnisse der Bindemittelprüfung, 17 μm Schichtdicke

| Bindemittel | pH | Umgriff nach Ford bei 17 μm Aussenschichtdicke | Acetonfestigkeit bei Einbrenntemperatur | Schlagtiefung Nm | Salzsprühtest nach ASTM, Unterwanderung am Ritz | |
|---|---|---|---|---|---|---|
| Beispiel 6 | 7,9 | 20 cm (280 V) | 1 (160°C) | 18,08 | 500 h | 0,5 mm |
| | | | 2 (140°C) | 9,04 | 500 h | 0,5-1 mm |
| Beispiel 7 | 8,0 | 22 cm (260 V) | 1 (160°C) | 18,08 | 500 h | 0,3 mm |
| | | | 1 (140°C) | 18,08 | 500 h | 0,5 mm |
| Beispiel 8 | 8,2 | 21,5 cm (300 V) | 1 (160°C) | 18,08 | 500 h | 0,1 mm |
| | | | 1 (140°C) | 18,08 | 500 h | 0,5 mm |

## Patentansprüche

1. Verfahren zur Herstellung von Harnstoffkondensationsprodukten aus primärem Diamin und Harnstoff, dadurch gekennzeichnet, dass man

(A) mindestens ein aliphatisches primäres Di- und/oder Polyamin, dessen primäre Aminogruppen durch mehr als 3 Kohlenstoffatome voneinander getrennt sind, oder ein cycloaliphatisches oder aromatisches Polyamin, dessen primäre Aminogruppen durch mindestens 3 Kohlenstoffatome voneinander getrennt sind, mit

(B) Harnstoff,

(C) mindestens einem sekundären Monoamin mit einem Siedepunkt von weniger als 250°C und gegebenenfalls

(D) einem oder mehreren Polyalkoholen

bei erhöhter Temperatur, gegebenenfalls in Gegenwart von Katalysatoren, umsetzt und den entstehenden Ammoniak abtrennt.

2. Verfahren nach Anspruch 1, dadurch gekennzeichnet, dass das Äquivalenzverhältnis von $NH_2$-Gruppen der primären Di- und/oder Polyamine (A) zu $NH_2$-Gruppen des Harnstoffs (B) zu NH-Gruppen des sekundären Monoamins (C) zu OH-Gruppen der Polyalkohole (D) 1:1,2 bis 2,4:0,2 bis 20:0 bis 0,9 beträgt.

3. Verfahren nach einem der Ansprüche 1 oder 2, dadurch gekennzeichnet, dass als Komponente (D) ein Polyalkohol mit einem Molekulargewicht von 62 bis 5000 und 2 bis 10 Hydroxylgruppen verwendet wird.

4. Verfahren nach einem der Ansprüche 1 bis 3, dadurch gekennzeichnet, dass ein Überschuss an sekundärem Monoamin eingesetzt und am Ende der Reaktion unter vermindertem Druck abdestilliert wird.

5. Verfahren nach einem der vorhergehenden Ansprüche, dadurch gekennzeichnet, dass die Umsetzung unter einem Druck von 0,1 bis 20 bar durchgeführt wird.

6. Verfahren nach einem der vorhergehenden Ansprüche, dadurch gekennzeichnet, dass die Reaktion bei einer Temperatur von 120 bis 230°C durchgeführt wird.

7. Verfahren nach einem der vorhergehenden Ansprüche, dadurch gekennzeichnet, dass als Komponente (C) ein sekundäres Amin mit einem Siedepunkt zwischen 100 und 200°C eingesetzt wird.

8. Verfahren nach einem der vorhergehenden Ansprüche, dadurch gekennzeichnet, dass als sekundäres Amin Di-n-butylamin eingesetzt wird.

9. Harnstoffkondensationsprodukte, erhältlich nach einem Verfahren gemäss einem der Ansprüche 1 bis 8.

10. Verwendung der nach einem Verfahren gemäss einem der Ansprüche 1 bis 8 hergestellten Harnstoffkondensationsprodukte als Bindemittelkomponente in hitzehärtbaren Lacken.

11. Verwendung der nach einem Verfahren gemäss einem der Ansprüche 1 bis 8 hergestellten Harnstoffkondensationsprodukte als Bindemittelkomponente in hitzehärtbaren, kathodisch abscheidbaren Elektrotauchlacken.

12. Verwendung der nach einem Verfahren gemäss einem der Ansprüche 1 bis 8 hergestellten Harnstoffkondensationsprodukte als Bindemittelkomponente für die Pulverlackierung.

13. Bindemittel für hitzehärtbare Lacke, dadurch gekennzeichnet, dass sie aus 50 bis 98 Gew.-% eines üblichen selbstvernetzenden Lackbindemittels und 2 bis 50 Gew.-% eines nach einem Verfahren gemäss einem der Ansprüche 1 bis 8 hergestellten Harnstoffkondensationsproduktes bestehen.

14. Bindemittel für hitzehärtbare Lacke, dadurch gekennzeichnet, dass sie aus 40 bis 90 Gew.-% eines üblichen nicht selbstvernetzenden Lackbindemittels und 10 bis 60 Gew.-% eines nach einem Verfahren gemäss einem der Ansprüche 1 bis 8 hergestellten Harnstoffkondensationsproduktes bestehen.

## Claims

1. A process for the preparation of urea condensates from a primary diamine and urea, wherein

(A) at least one aliphatic primary di- and/or polyamine whose primary amino groups are separated from one another by more than 3 carbon atoms, or at least one cycloaliphatic or aromatic polyamine whose primary amino groups are separated from one another by at least 3 carbon atoms, is reacted with

(B) urea, and

(C) at least one secondary monoamine having a boiling point of less than 250°C, with or without

(D) one or more polyalcohols,

at elevated temperature and in the presence or absence of catalysts, and the ammonia formed is separated off.

2. A process as claimed in claim 1, wherein the ratio of the number of equivalents of $NH_2$ groups of the primary di- and/or polyamine (A) to $NH_2$ groups of the urea (B) to NH groups of the secondary monoamine (C) to OH groups of the polyalcohol (D) is 1:1.2 - 2.4:0.2 - 20:0 - 0.9.

3. A process as claimed in claim 1 or 2, wherein a polyalcohol having a molecular weight of from 60 to 5,000 and containing from 2 to 10 hydroxyl groups is used as component (D).

4. A process as claimed in any of claims 1 to 3, wherein an excess of secondary monoamine is employed, and the excess is distilled off under reduced pressure at the end of the reaction.

5. A process as claimed in any of the preceding claims, wherein the reaction is carried out under a pressure of from 0.1 to 20 bar.

6. A process as claimed in any of the preceding claims, wherein the reaction is carried out at a temperature of from 120 to 230°C.

7. A process as claimed in any of the preceding claims, wherein a secondary amine having a boiling point between 100 and 200°C is employed as component (C).

8. A process as claimed in any of the preceding claims, wherein di-n-butylamine is employed as the secondary amine.

9. A urea condensate obtainable by a process as claimed in any of claims 1 to 8.

10. The use of a urea condensate prepared by a process as claimed in any of claims 1 to 8 as binder component in thermosetting surface coatings.

11. The use of a urea condensate prepared by a process as claimed in any of claims 1 to 8 as binder component in thermosetting cathodic electrocoat finishes.

12. The use of a urea condensate prepared by a process as claimed in any of claims 1 to 8 as binder component for powder coatings.

13. Binders for thermosetting surface coatings, comprising from 50 to 98% by weight of a conventional self-crosslinking surface coating binder and from 2 to 50% by weight of a urea condensate prepared by a process as claimed in any of claims 1 to 8.

14. Binders for thermosetting surface coatings, comprising from 40 to 90% by weight of a conventional non-self-crosslinking surface coating binder and from 10 to 60% by weight of a urea condensate prepared by a process as claimed in any of claims 1 to 8.

## Revendications

1. Procédé de préparation de produits de condensation à base d'urée à partir d'urée et de diamines primaires, caractérisé en ce que l'on fait réagir à température accrue, le cas échéant en présence de catalyseurs:

(A) au moins une diamine et(ou) une polyamine aliphatique primaire, dont les groupes amino primaires sont séparés par plus de trois atomes de carbone, ou une polyamine cycloaliphatique or aromatique, dont les groupes amino sont séparés par au moins trois atomes de carbone,

(B) de l'urée,

(C) au moins une monoamine secondaire avec un point d'ébullition inférieur à 250°C et éventuellement

(D) un ou plusieurs polyalcools,

l'ammoniac qui se forme étant séparé.

2. Procédé suivant la revendication 1, caractérisé en ce que le rapport des équivalents des groupes -$NH_2$ des di- et(ou) poly-amines primaires (A) aux groupes -$NH_2$ de l'urée (B), aux groupes -NH de la monoamine secondaire (C) et aux groupes -OH des polyalcools (D) est compris entre 1:1,2 à 2,4:0,2 à 20:0 à 0,9.

3. Procédé suivant l'une des revendications 1 et 2, caractérisé en ce que la composante (D) est un polyalcool comprenant 2 à 10 groupes hydroxyle et possédant un poids moléculaire entre 60 et 5000.

4. Procédé suivant l'une des revendications 1 à 3, caractérisé en ce que la monoamine secondaire est mise en oeuvre en excès, celui-ci étant éliminé à la fin de la réaction sous pression réduite.

5. Procédé suivant l'une des revendications précédentes, caractérisé en ce que la réaction est effectuée sous une pression comprise entre 0,1 et 20 bars.

6. Procédé suivant l'une des revendications précédentes, caractérisé en ce que la réaction est réalisée à une température comprise entre 120 et 230°C.

7. Procédé suivant l'une des revendications précédentes, caractérisé en ce que la composante (C) est une amine secondaire avec un point d'ébullition entre 100 et 200°C.

8. Procédé suivant l'une des revendications précédentes, caractérisé en ce que l'on emploie comme amine secondaire la di-n-butyl-amine.

9. Produits de condensation à base d'urée, préparés par un procédé suivant l'une des revendications 1 à 8.

10. Utilisation de produits de condensation à base d'urée, préparés par un procédé suivant l'une des revendications 1 à 8, comme liants dans des laques ou vernis thermodurcissables.

11. Utilisation de produits de condensation à base d'urée, préparés par un procédé suivant l'une des revendications 1 à 8, comme liants dans des laques ou vernis thermodurcissables pour le trempage électrophorétique cathodique.

12. Utilisation de produits de condensation à base d'urée, préparés par un procédé suivant l'une des revendications 1 à 8, comme liants dans des poudres pour revêtement électrostatique.

13. Liants pour vernis ou laques thermodurcissables, caractérisés en ce qu'ils sont constitués de 50 à 98% en poids d'un liant pour vernis auto-réticulant usuel et de 2 à 50% en poids d'un produit de condensation à base d'urée, préparé par un procédé suivant l'une des revendications 1 à 8.

14. Liants pour vernis ou laques thermodurcissables, caractérisés en ce qu'ils sont constitués de 40 à 90% en poids d'un liant pour vernis non auto-réticulant usuel et de 10 à 60% en poids d'un produit de condensation à base d'urée, préparé par un procédé suivant l'une des revendications 1 à 8.